# FASCICULE DE BREVET EUROPEEN

(11) **EP 0 526 272 B1**
(45) Date de publication et mention de la délivrance du brevet: **07.01.1998**
(21) Numéro de dépôt: 92401779.1
(22) Date de dépôt: 25.06.1992
(51) Int. Cl.: C03C 3/091, G02F 1/1333

(54) **Verres pour substrats destinés à l'électronique et produits en résultant**
Gläser für elektronische Substrate und daraus hergestellte Produkte
Glasses for electronic substrates and products thereof

(30) Priorité: 02.07.1991 FR 9108201
(43) Date de publication de la demande: 03.02.1993
(73) Titulaire: SAINT-GOBAIN VITRAGE, 92400 Courbevoie (FR)
(72) Inventeur: Ponthieu, Christine, F-75014 Paris (FR); Petitmaire, Denis, F-75018 Paris (FR); Jousse, Dider, F-95320 Saint Leu La Foret (FR); Fournier, Pascal, F-60300 Senlis (FR)
(74) Mandataire: Breton, Jean-Claude

(56) Documents cités:
- EP-A- 0 316 089
- WO-A-89/02877
- US-A- 4 166 747

## Description

La présente invention concerne des compositions de verre susceptibles d'être transformées en feuilles qui, découpées au format désiré sont destinées à servir de substrats sur lesquels seront formés des transistors en films minces, ou qui seront utilisés pour la fabrication d'écrans tels que les écrans à cristaux liquides.

Les verres déjà connus dans ce domaine d'application sont nombreux et appartiennent, pour la plupart, à la grande famille des verres alumino-borosilicatés comprenant des oxydes alcalino-terreux.

Ces verres sont sélectionnés en fonction des propriétés physico-chimiques que le substrat doit posséder. En effet, lorsque le substrat de verre présente à sa surface un réseau de transistors en couche mince, cette couche est obtenue à l'issue de plusieurs opérations au cours desquelles le verre a été soumis à des températures relativement élevées. Le verre ne doit pas se déformer au cours de ces opérations et donc présenter la température inférieure de recuisson (strain point) la plus élevée possible. De plus, le coefficient de dilatation thermique du verre formant le substrat doit être compatible avec celui des couches qui sont déposées à sa surface. Enfin, le verre ne doit pratiquement pas comporter d'éléments susceptibles de migrer dans les couches formées et de détériorer les propriétés du réseau de transistors ; c'est le cas, en particulier, des alcalins.

Ces verres doivent présenter aussi des caractéristiques de viscosité et de dévitrification adaptées au procédé choisi pour obtenir une feuille de verre dont l'épaisseur soit la plus uniforme et la surface la plus régulière possible.

Ces verres doivent également présenter une bonne résistance chimique à l'égard des milieux acides, notamment vis-à-vis de solutions à base d'acide fluorhydrique.

Un des procédés utilisables consiste à amener le verre fondu dans un dispositif dont le sommet des parois latérales, qui convergent vers le bas, sert de déversoir. Le verre s'écoule le long des parois latérales, formant ainsi deux courants qui se réunissent à la pointe du dispositif, avant d'être étirés verticalement de haut en bas sous la forme d'une feuille plane. Un tel procédé exige que le verre présente, à la température du liquidus, une viscosité égale à au moins 2 à 3.10⁵ poises. De tels verres sont, par exemple, illustrés par le brevet US-A-4 824 808.

Un autre procédé consiste à napper le verre fondu sur un bain d'étain métallique selon la technique bien connue du verre flotté. Des compositions de verre, susceptibles d'être flottées et destinées à servir de substrats pour former des écrans plats, sont notamment décrites dans la demande de brevet WO 89/02877.

Ces verres appartiennent à la famille des alumino-borosilicates comprenant une forte teneur en oxydes alcalino-terreux. Si ces verres possèdent de bonnes caractéristiques physico-chimiques eu égard à l'application considérée, leur composition contient un pourcentage élevé d'oxydes onéreux comme B₂O₃, SrO et BaO. De plus, ils sont relativement visqueux pour le procédé de verre flotté si l'on en juge d'après les exemples illustrant cette invention. En effet, la température correspondant à log η = 4 est égale ou supérieure à 1150°C, voire même à 1200°C. A titre de rappel, la température correspondant à la même viscosité pour un verre flotté ordinaire (verre silico-sodo-calcique) est comprise entre 1000 et 1050°C.

L'invention a pour objet des compositions de verre susceptibles d'être flottées qui présentent les caractéristiques physico-chimiques exigées pour les substrats d'écrans à matrice active et qui sont économiquement intéressantes.

L'invention a, notamment, pour objet des compositions de verre qui se nappent à la surface du bain d'étain à une température inférieure à celle des verres connus pour ce type d'application.

L'invention a également pour objet des compositions de verre comprenant une quantité limitée de constituants onéreux.

Ces buts sont atteints grâce à des compositions de verre, dénuées d'oxyde de zinc, qui comprennent les constituants suivants, dans les limites ci-après exprimées en pourcentages cationiques :

| | |
|---|---|
| SiO₂ + B₂O₃ | 57 à 67 % |
| avec B₂O₃ | 5 à 20 % |
| Al₂O₃ | 14 à 18 % |
| RO (CaO + MgO + BaO + SrO) | 18 à 28 % |
| avec CaO/RO ≥ 0,7 et CaO ≥ | 18 % |
| F₂ | 0 à 3 % |
| Na₂O + K₂O | 0 à 0,5 % |
| TiO₂ | 0 à 2,5 % |
| Fe₂O₃ | ≤ 0,5 % |

F₂ étant assimilé à un cation.

Les compositions de verre selon l'invention sont dénuées d'oxyde de zinc car, dans les verres qui en contiennent, cet oxyde est partiellement réduit en contact avec le bain d'étain et l'atmosphère réductrice qui règne au-dessus de ce bain. La composition superficielle du ruban de verre est alors notablement différente de celle du verre sous-jacent, ce qui se traduit par des défauts de planéité dudit ruban.

SiO₂ et B₂O₃ sont les deux oxydes principaux qui forment le réseau vitreux des verres selon l'invention et sont essentiels pour leur stabilité.

Lorsque la somme de ces deux oxydes est inférieure à 57 %, on observe une diminution de la résistance chimique du verre et une aggravation du phénomène de dévitrification liée à la présence en trop forte quantité des autres constituants des compositions selon l'invention.

Lorsque la somme de ces deux oxydes excède 67 % et que la teneur en B₂0₃ est faible, la fusion du verre devient difficile, sa viscosité augmente notablement et la dévitrification sous forme d'espèces cristallines à base de silice augmente rapidement.

Dans ce contexte, la teneur en B₂O₃ ne doit pas être inférieure à 5 % pour maintenir la dévitrification dans des limites acceptables. Par ailleurs, cet oxyde est nécessaire pour améliorer la résistance chimique du verre, notamment à l'égard de l'acide fluorhydrique, faciliter sa fusion et diminuer sa viscosité ainsi que son coefficient de dilatation. Au-delà de 20 %, B₂O₃ ne contribue plus à l'amélioration de la résistance chimique des verres selon l'invention et diminue la température inférieure de recuisson. Par ailleurs, une teneur plus élevée de cet oxyde augmente le coût du mélange vitrifiable et accentue les problèmes d'envol de matière lors de la fusion, ce qui nuit à l'homogénéité du verre.

De manière plus précise, les compositions de verre selon l'invention comprennent, de préférence, entre 42 et 53 % de SiO₂.

Al₂O₃ joue également un rôle de stabilisant dans les compositions selon l'invention. Il augmente la température inférieure de recuisson et, dans une certaine mesure, la résistance chimique des verres. Une teneur en Al₂O₃ inférieure à environ 14 % ou supérieure à environ 18 % provoque une augmentation de la dévitrification.

Les oxydes alcalino-terreux jouent également un rôle très important dans les verres selon l'invention : ils favorisent leur fusion et diminuent leur viscosité.

Parmi ces oxydes CaO joue un rôle particulier. CaO permet tout à la fois de faciliter la fusion du verre, de diminuer sa viscosité ainsi que sa température de liquidus. Cet oxyde permet également d'augmenter la température inférieure de recuisson sans trop augmenter le coefficient de dilatation.

Pour obtenir ces effets dans les verres selon l'invention, le pourcentage cationique de CaO doit être au moins égal à 18 %. De plus, le pourcentage cationique de CaO représente au moins 70 % de la somme des pourcentages cationiques de l'ensemble des oxydes alcalino-terreux introduits dans le verre, cette somme variant de 18 à 25 %.

Lorsque cette somme est inférieure à 18 %, la diminution de la viscosité du verre aux températures élevées est insuffisante. Lorsque cette somme est supérieure à 25 %, la tendance à la dévitrification augmente considérablement, le coefficient de dilatation augmente aussi et ceci d'autant plus rapidement que la teneur en BaO et SrO est plus importante.

D'une manière plus précise, les compositions de verre selon l'invention comprennent de 0 à 5 % de MgO, de 0 à 4 % de BaO et de 0 à 4 % de SrO.

L'introduction de MgO permet de diminuer la viscosité du verre et son coefficient de dilatation et d'augmenter sa résistance chimique. Au-delà de 5 %, la dévitrification du verre s'accélère et se manifeste à des températures trop élevées.

L'introduction de BaO et/ou de SrO favorise la diminution de la viscosité du verre aux températures élevées ; ces oxydes permettent aussi de réduire les risques de dévitrification. Lorsqu'ils sont introduits dans les verres selon l'invention en quantité assez importante, le coefficient de dilatation thermique augmente.

Afin d'éviter le phénomène de migration d'éléments dans la couche recouvrant la surface d'un substrat, les verres selon l'invention comprennent très peu, voire pas du tout, d'oxydes alcalins. La teneur maximale de ces oxydes est d'environ 0,5 % exprimé en pourcentage cationique.

Les verres selon l'invention peuvent comprendre également d'autres constituants comme TiO₂ qui améliore la résistance chimique du verre, du fluor qui facilite la fusion du verre, diminue sa viscosité, et augmente sa résistance chimique lorsqu'il est substitué à la chaux, ainsi que de l'oxyde de fer. Le fer total, exprimé sous forme de Fe₂O₃, demeure inférieur à environ 0,5 % exprimé en pourcentage cationique.

Les compositions de verre préférées, selon l'invention, comprennent les constituants suivants, dans les limites ci-après exprimées en pourcentages cationiques :

| | |
|---|---|
| SiO₂ | 42 à 53 % |
| B₂O₃ | 5 à 20 % |
| Al₂O₃ | 14 à 18 % |
| CaO | 18 à 22 % |
| MgO | 0 à 5 % |
| BaO | 0 à 4 % |
| SrO | 0 à 4 % |
| Na₂O + K₂O | 0 à 0,5 % |
| TiO₂ | 0 à 2,5 % |
| Fe₂O₃ | ≤ 0,5 % |
| F₂ | 0 à 3 % |

la somme SiO₂ + B₂O₃ demeurant comprise entre 57 et 67 % ;
la somme des oxydes alcalino-terreux (RO) demeurant comprise entre 18 et 25 % avec CaO/RO ≥ 0,7.

Afin de minimiser le coût des compositions de verre selon l'invention, sans nuire aux caractéristiques physico-chimiques qu'elles doivent présenter pour l'application envisagée, la somme des pourcentages des oxydes de baryum et de strontium est, de préférence, égale ou inférieure à 6 %.

Dans le souci d'éviter toute migration d'éléments dans les couches déposées à la surface du substrat, formé d'une feuille de verre dont la composition a été définie précédemment, les verres selon l'invention présentent un pourcentage de Na₂O qui est, de préférence, inférieur à environ 0,2 %.

Les avantages présentés par les verres selon l'invention seront mieux appréciés à travers les quelques exemples figurant dans le tableau en annexe.

Les caractéristiques thermiques, la dévitrification et la viscosité des verres illustrant l'invention ont été mesurées selon les méthodes bien connues de l'homme de l'art. Leur résistance chimique a été appréciée en mesurant la perte de poids subie par une plaquette de verre de 15x30x6 millimètres, polie sur les deux faces, après son séjour dans une solution acide. Cette perte est exprimée en mg/cm². La résistance à l'acide fluorhydrique (R_{HF}) est mesurée après un séjour de 7 heures, à température ambiante, dans une solution aqueuse d'acide fluorhydrique et de fluorure d'ammonium. Cette solution d'attaque est formée d'une solution à 50 % d'acide fluorhydrique et d'une solution à 40 % de fluorure d'ammonium mélangées dans un rapport pondéral de 1 à 7.

Les verres selon l'invention sont élaborés à partir de matières premières vitrifiables, dont certaines sont naturelles et qui doivent présenter le moins d'impuretés possible.

Ainsi le mélange vitrifiable utilisé pour obtenir 100 g du verre correspondant à l'exemple n° 1 est le suivant :

| | |
|---|---|
| Sable de Roncevaux | 55,327 g |
| Alumine hydratée (Prolabo) | 21,760 g |
| Calcaire Saint-Germain | 37,712 g |
| Carbonate de magnésie | 0,782 g |
| Acide borique | 15,793 g |
| Gypse | 0,295 g |

Dans cet exemple, le sulfate de calcium a été utilisé comme affinant. D'autres matières sont susceptibles de jouer ce rôle dans l'élaboration des verres de l'invention comme les chlorures de calcium et de baryum, le sulfate d'ammonium ou l'anhydride arsénieux.

Les verres selon l'invention présentent, généralement, des températures inférieures de recuisson supérieures à 630°C, des coefficients de dilatation thermique inférieur à environ 55.10⁻⁷/°C et une bonne résistance à l'attaque fluorhydrique.

De plus, les verres de l'invention se distinguent par une diminution importante de leur viscosité aux températures élevées. En effet, la température à log η = 3,5 est généralement inférieure à 1180°C ; celle correspondant à log η = 4 de ces verres est généralement inférieure à 1120°C. Ces différentes caractéristiques permettent de napper aisément les verres de l'invention à la surface d'un bain d'étain et d'obtenir ainsi, par la technique du verre flotté, un ruban dont l'épaisseur est strictement contrôlée. A partir d'un tel ruban, des feuilles pouvant servir de substrats sont obtenues par découpe.

Les verres de l'invention se distinguent également par une vitesse maximale de dévitrification très faible. Cette caractéristique permet d'écarter tout risque de dévitrification du verre pendant son formage malgré une température de liquidus susceptible d'atteindre 1230°C.

Les verres selon l'invention peuvent servir de substrats sur lesquels sont déposées différentes couches à base, notamment, de Si, SiOx, d'oxydes d'indium, d'étain (ITO) ou d'aluminium afin de réaliser un fin réseau de transistors en films minces (TFT).

Les verres selon l'invention peuvent également être utilisés pour la réalisation de filtres colorés. Le verre est, par exemple, recouvert d'un film de Cr ou NiCr, qui est ensuite gravé par photolithographie. Un pavage de couleurs (rouge, vert, bleu) est ensuite réalisé par dépôt de couleurs et photolithogravure. Le tout est recouvert d'une couche de polyimide puis d'ITO.

**TABLEAU**

| | Ex. 1 | Ex. 2 | Ex. 3 | Ex. 4 |
|---|---|---|---|---|
| SiO₂ | 50,82 | 50,55 | 46,63 | 50,38 |
| Al₂O₃ | 14,61 | 14,14 | 14,30 | 14,37 |
| CaO | 20,22 | 19,16 | 20,02 | 19,89 |
| MgO | 0,47 | 0,47 | 0,46 | 0,47 |
| B₂O₃ | 13,75 | 15,59 | 18,50 | 13,67 |
| Fe₂O₃ | 0,02 | 0,02 | 0,02 | 0,02 |
| TiO₂ | 0,01 | 0,01 | 0,01 | 1,16 |
| Na₂O | 0,07 | 0,03 | 0,03 | - |
| K₂O | - | - | - | - |
| SO₃ | 0,03 | 0,02 | 0,02 | 0,03 |
| température inférieure de recuisson (°C) | 659 | 652 | 647 | 661 |
| coefficient de dilatation (10⁻⁷/°C) | 50,5 | 53 | 47,6 | 50,5 |
| liquidus (°C) | 1190 | 1200 | 1200 | 1200 |
| Température vit.max.(°C) | 1075 | 1050 | 1075 | 1075 |
| vit. max. (µm/min) | 0,17 | 0,25 | 0,17 | 0,25 |
| Temp. log η = 3,5 (°C) | 1148 | 1149 | 1125 | 1144 |
| Temp. log η = 4 (°C) | 1095 | 1092 | 1068 | 1088 |
| R_{HF} (mg/cm²) | 9,35 | 8,87 | 9,84 | - |

**TABLEAU**

| | Ex. 5 | Ex.6* | Ex.7* | Ex. 8 |
|---|---|---|---|---|
| SiO₂ | 53,07 | 51,00 | 51,00 | 52,22 |
| Al₂O₃ | 14,52 | 15,20 | 15,20 | 14,41 |
| CaO | 18,96 | 18,30 | 18,30 | 18,35 |
| MgO | 2,98 | 3,00 | 3,00 | 4,74 |
| SrO | | 2,00 | | |
| BaO | | | 2,00 | |
| B₂O₃ | 10,40 | 10,50 | 10,50 | 10,20 |
| Fe₂O₃ | | | | |
| TiO₂ | | | | |
| Na₂O | 0,05 | | | 0,04 |
| K₂O | | | | |
| F₂ | | | | |
| SO₃ | 0,02 | | | 0,02 |
| température inférieure de recuisson (°C) | 653 | 655 | | 655 |
| coefficient de dilatation (10⁻⁷/°C) | 53,7 | 53,6 | 55,2 | 53,2 |
| liquidus (°C) | 1200 | 1180 | 1170 | 1230 |
| Température vit.max.(°C) | 1060 | | | 1140 |
| vit. max. (µm/min) | 0,22 | | | 0,51 |
| Temp. log η = 3,5 (°C) | 1152 | 1163 | 1158 | 1164 |
| Temp. log η = 4 (°C) | 1099 | 1107 | 1102 | 1108 |
| R_{HF} (mg/cm²) | 10,84 | 12,13 | 12,36 | 10,76 |

| | | | | |
|---|---|---|---|---|
| [*] - Composition théorique | | | | |

**TABLEAU**

| | Ex. 9 | Ex.10* | Ex.11 |
|---|---|---|---|
| SiO₂ | 51,03 | 51,00 | 52,67 |
| Al₂O₃ | 14,65 | 15,20 | 14,20 |
| CaO | 19,44 | 19,30 | 18,55 |
| MgO | 3,02 | 3,00 | 2,76 |
| SrO | | | |
| BaO | | | |
| B₂O₃ | 9,78 | 10,50 | 9,55 |
| Fe₂O₃ | | | |
| TiO₂ | 1,97 | | |
| Na₂O | 0,06 | | 0,10 |
| K₂O | | | |
| F₂ | | 1,00 | 2,13 |
| SO₃ | 0,03 | | 0,03 |
| température inférieure de recuisson (°C) | 656 | 646 | 634 |
| coefficient de dilatation (10⁻⁷/°C) | 53,5 | 53,4 | 51,70 |
| liquidus (°C) | 1210 | 1200 | 1210 |
| Température vit.max.(°C) | 1120 | | |
| vit. max. (µm/min) | 0,41 | | |
| Temp. log η = 3,5 (°C) | 1160 | 1164 | 1176 |
| Temp. log η = 4 (°C) | 1103 | 1106 | 1115 |
| R_{HF} (mg/cm²) | 9,67 | 13,82 | 9,98 |

| | | | |
|---|---|---|---|
| [*] - Composition théorique | | | |

## Revendications

1. Composition de verre destinée à former un substrat utilisé pour la réalisation de matériel électronique, **caractérisée en ce qu'**elle comprend les constituants suivants, dans les limites ci-après exprimées en pourcentages cationiques :
| | |
|---|---|
| SiO₂ + B₂O₃ | 57 à 67 % |
| avec B₂O₃ | 5 à 20 % |
| Al₂O₃ | 14 à 18 % |
| RO (CaO + MgO + BaO + SrO) | 18 à 25 % |
| avec CaO/RO ≥ 0,7 et CaO ≥ | 18 % |
| Na₂O + K₂O | 0 à 0,5 % |
| TiO₂ | 0 à 2,5 % |
| Fe₂O₃ | ≤ 0,5 % |
| F₂ | 0 à 3 % |
F₂ étant assimilé à un cation, **et en ce que** ladite composition de verre présente une température inférieure de recuisson supérieure à 630°C et un coefficient de dilatation thermique inférieur à 55.10⁻⁷/°C.

2. Composition de verre selon la revendication 1, **caractérisée en ce que** sa teneur en SiO₂ exprimée en pourcentage cationique, est comprise entre 42 et 53%.

3. Composition de verre selon la revendication 1, **caractérisée en ce que** sa teneur en oxydes alcalino-terreux autres que CaO, exprimée en pourcentage cationique, est définie comme suit :
| | |
|---|---|
| MgO | 0 à 5 % |
| BaO | 0 à 4 % |
| SrO | 0 à 4 % |

4. Composition de verre selon la revendication 1, **caractérisée en ce qu'**elle comprend les constituants suivants, dans les limites définies ci-après :
| | |
|---|---|
| SiO₂ | 42 à 53 % |
| B₂O₃ | 5 à 20 % |
| Al₂O₃ | 14 à 18 % |
| CaO | 18 à 22 % |
| MgO | 0 à 5 % |
| BaO | 0 à 4 % |
| SrO | 0 à 4 % |
| Na₂O + K₂O | 0 à 0,5 % |
| TiO₂ | 0 à 2,5 % |
| Fe₂O₃ | ≤ 0,5 % |
| F₂ | 0 à 3 % |

5. Composition de verre selon la revendication 4, **caractérisée en ce que** la somme des pourcentages de BaO et SrO demeure égale ou inférieure à 6%.

6. Composition de verre selon l'une des revendications 4 et 5, **caractérisée en ce que** le pourcentage cationique de Na₂O demeure inférieur à 0,2%.

7. Feuille de verre obtenue par découpe d'un ruban de verre formé par nappage de verre fondu à la surface d'un bain d'étain, **caractérisée en ce que** la composition du verre qui la constitue est définie par l'une quelconque des revendications précédentes.

8. Substrat de verre sur lequel est formé un réseau de transistors en films minces, **caractérisé en ce qu'**il est constitué d'une feuille de verre telle que définie par la revendication 7.

9. Substrat de verre sur lequel sont déposées différentes couches permettant la réalisation de filtres colorés, **caractérisé en ce qu'**il est constitué d'une feuille de verre telle que définie par la revendication 7.

## Claims

1. Glass composition intended for forming a substrate used for the production of electronic equipment, characterized in that it comprises the following constituents, within the limits expressed below in cationic percentages:
| | |
|---|---|
| SiO₂ + B₂O₃ | 57 to 67% |
| with B₂O₃ | 5 to 20% |
| Al₂O₃ | 14 to 18% |
| RO (CaO+MgO+BaO+SrO) | 18 to 25% |
| with CaO/RO ≥ 0.7 and CaO ≥ | 18% |
| Na₂O + K₂O | 0 to 0.5% |
| TiO₂ | 0 to 2.5% |
| Fe₂O₃ | ≤ 0.5% |
| F₂ | 0 to 3% |
F₂ being assimilated to a cation, and in that said glass composition has a strain point higher than 630°C and a coefficient of thermal expansion lower than 55 x 10⁻⁷/°C.

2. Glass composition according to claim 1, characterized in that its SiO₂ content, expressed as cationic percentage, lies between 42 and 53%.

3. Glass composition according to claim 1, characterized in that its content of alkaline-earth oxides other than CaO, expressed as a cationic percentage, is defined as follows:
| | |
|---|---|
| MgO | 0 to 5% |
| BaO | 0 to 4% |
| SrO | 0 to 4% |

4. Glass compositiion according to claim 1, characterized in that it comprises the following constituents, within the limits defined below:
| | |
|---|---|
| SiO | 42 to 53% |
| B₂O₃ | 5 to 20% |
| Al₂O₃ | 14 to 18% |
| CaO | 18 to 22% |
| MgO | 0 to 5% |
| BaO | 0 to 4% |
| SrO | 0 to 4% |
| Na₂O + K₂O | 0 to 0.5% |
| TiO₂ | 0 to 2.5% |
| Fe₂O₃ | ≤ 0.5% |
| F₂ | 0 to 3% |

5. Glass composition according to claim 4, characterized in that the sum of the BaO and SrO percentages remains equal to or less than 6%.

6. Glass composition according to one of claims 4 and 5, characterized in that the cationic percentage of Na₂O remains below 0.2%.

7. Glass sheet producted by cutting from a glass ribbon formed by spreading molten glass on the surface of a tin bath, characterized in that the glass composition of the sheet is defined by any one of the preceding claims.

8. Glass substrate, on which is formed a network of thin film transistors, characterized in that it is constituted of a glass sheet as defined by claim 7.

9. Glass substrate, on which are deposited various films making possible the construction of coloured filters, characterized in that it is constituted of a glass sheet as defined by claim 7.

## Patentansprüche

1. Glaszusammensetzung für die Bildung eines Substrats, das zur Herstellung elektronischen Materials verwendet wird, **dadurch gekennzeichnet, daß** sie folgende Bestandteile innerhalb nachstehender in Kationenprozentanteilen ausgedrückter Grenzen enthält:
| | |
|---|---|
| SiO₂ + B₂O₃ | 57 bis 67 %, |
| davon B₂O₃ | 5 bis 20 %, |
| Al₂O₃ | 14 bis 18 %, |
| RO (CaO + MgO + BaO + SrO) | 18 bis 25 %, |
| davon CaO/RO ≥ 0,7 und CaO ≥ | 18 %, |
| Na₂O + K₂O | 0 bis 0,5 %, |
| TiO₂ | 0 bis 2,5 %, |
| Fe₂O₃ | ≤ 0,5 %, |
| F₂ | 0 bis 3 %, |
wobei F₂ an ein Kation gebunden ist, **und daß** die Glaszusammensetzung eine untere Kühlungstemperatur von über 630 °C und einen Wärmeausdehnungskoeffizienten von unter 55·10⁻⁷ /°C besitzt.

2. Glaszusammensetzung nach Anspruch 1, **dadurch gekennzeichnet, daß** ihr als Kationenprozentanteil ausgedrückter SiO₂-Gehalt 42 bis 53 % beträgt.

3. Glaszusammensetzung nach Anspruch 1, **dadurch gekennzeichnet, daß** ihr als Kationenprozentanteil ausgedrückter Gehalt an Erdalkalimetalloxiden außer CaO wie folgt definiert ist:
| | |
|---|---|
| MgO | 0 bis 5 %, |
| BaO | 0 bis 4 %, |
| SrO | 0 bis 4 %. |

4. Glaszusammensetzung nach Anspruch 1, **dadurch gekennzeichnet, daß** sie folgende Bestandteile innerhalb nachstehend definierter Grenzen enthält:
| | |
|---|---|
| SiO₂ | 42 bis 53 %, |
| B₂O₃ | 5 bis 20 %, |
| Al₂O₃ | 14 bis 18 %, |
| CaO | 18 bis 22 %, |
| MgO | 0 bis 5 %, |
| BaO | 0 bis 4 %, |
| SrO | 0 bis 4 %, |
| Na₂O + K₂O | 0 bis 0,5 %, |
| TiO₂ | 0 bis 2,5 %, |
| Fe₂O₃ | ≤ 0,5 %, |
| F₂ | 0 bis 3 %. |

5. Glaszusammensetzung nach Anspruch 4, **dadurch gekennzeichnet, daß** die Summe der Prozentanteile aus BaO und SrO gleich oder kleiner als 6 % bleibt.

6. Glaszusammensetzung nach Anspruch 4 oder 5, **dadurch gekennzeichnet, daß** der Na₂O-Kationenprozentanteil unter 0,2 % bleibt.

7. Glasscheibe, die durch Zuschneiden eines durch Ausbreiten von geschmolzenem Glas auf der Oberfläche eines Zinnbades gebildeten Glasbandes erhalten ist, **dadurch gekennzeichnet, daß** die sie bildende Glaszusammensetzung durch einen der vorhergehenden Ansprüche definiert ist.

8. Glassubstrat, auf welchem ein Netz aus Dünnschichttransistoren ausgebildet wird, **dadurch gekennzeichnet, daß** es aus einer im Anspruch 7 definierten Glasscheibe besteht.

9. Glassubstrat, auf welchem verschiedene Schichten aufgebracht werden, die Farbfilter bilden, **dadurch gekennzeichnet, daß** es aus einer im Anspruch 7 definierten Glasscheibe besteht.
